# EUROPEAN PATENT APPLICATION

(11) **EP 1 548 579 A2**
(43) Date of publication of application: **29.06.2005**
(21) Application number: 04255374.3
(22) Date of filing: 03.09.2004
(51) Int. Cl.: G06F 9/44

(54) **Method and apparatus for providing passive look ahead for user interfaces**

(30) Priority: 17.09.2003 US 667110
(71) Applicant: Avaya Technology Corp., Basking Ridge, NJ 07920 (US)
(72) Inventor: Gentle, Christopher R., Gladesville, NSW 2111 (AU)
(74) Representative: Williams, David John

(57) **Abstract**

A method and system for providing a preview of the result of making a selection within an application program are provided. The consequences of the selection may be displayed as a transparent overlay. The consequences of an action are displayed visually, rather than by a textual explanation. Accordingly, a user is provided with information regarding the consequences of an action concisely, and without requiring the selection and deselection ofitems in order to determine their function.

## Description

### FIELD OF THE INVENTION

The present invention is directed to providing a visual representation ofthe consequences of making a selection in connection with a computer application. In particular, the present invention is directed to providing a depiction of the consequences of making a selection that comprises a rendering of the actual dialogue or window that would be displayed to the user if the selection were actually made.

### BACKGROUND OF THE INVENTION

Windowed computer applications typically present users with many options made available through menus and icons. Even users who are familiar with an application can become confused about which particular menu option or icon will produce a desired effect. As a result, users often have to explore the application by clicking on different menu items or icons in order to locate the desired option. The need to select and close dialogues or other actions initiated by making selections is inefficient, resulting in decreased productivity. In addition, the need to click through various application options causes a user's perception of the usability of the application to decrease.

In order to assist users in locating and selecting desired options, various online help functions have been developed. For example, by selecting a designated key provided as part of a keyboard, or by selecting a designated menu item, a user can enter a help dialogue. From there, the user may search for instructions on performing a desired operation or selecting a desired option. In addition, some help systems allow a user to initiate actions that normally require several steps to be performed automatically, once the instructions regarding the desired action have been located. However, such online help systems are often more cumbersome and time consuming than simply exploring application options by selecting and deselecting displayed menu items and icons.

In an attempt to streamline the process of exploring application features, systems that provide easily accessed textual descriptions of selectable items are available. For example, various applications display textual notes that provide information about a menu item or icon are available. In such systems, text related to a selectable item is displayed when a user controlled cursor remains over the selectable item for a predefined period of time. However, such textual information is difficult for users to quickly apprehend, particularly in connection with windowed interface systems.

Other forms of automated assistance in connection with the operation of computer applications have included automated assistants that are capable of suggesting actions that a user may wish to take based on actions the user is already taking. However, a user must still read and apprehend textual descriptions in order to make use of such assistance. Similarly, wizards, which are capable of taking users through a series of steps required to perform a desired action, are not capable of conveniently displaying to a user the consequences of making a particular selection.

### SUMMARY OF THE INVENTION

The present invention is directed to solving these and other problems and disadvantages of the prior art. According to an embodiment of the present invention, the consequences of making a selection are visually presented to a user. Furthermore, such consequences are displayed to the user without requiring that the user select an item about which information is desired. In accordance with an embodiment of the present invention, the consequences of making a selection are displayed when a user hovers over a selectable menu item, button or icon.

In accordance with an embodiment of the present invention, the depiction or look ahead visualization of the consequences of selecting an item is displayed in the form of an inactive version of the display that would be presented had the item actually been selected. The depiction may comprise a semi-transparent or blended overlay. Furthermore, the depiction may be removed if the user moves the cursor such that it no longer is in an area corresponding to an area of the selectable item that is related to the display.

In accordance with another embodiment of the present invention, the options and content dependent information included in the depiction can comprise selections and data actually available if the depicted selection were made. In accordance with an alternative embodiment of the present invention, the data and possible selections need not comprise the particular data or selections that would be available if the depicted selection were made. For instance, example selections or data may be presented.

### BRIEF DESCRIPTION OF THE DRAWINGS

**Fig. 1** is a block diagram depicting components of a computer such as may be used in connection with an embodiment of the present invention;
**Fig. 2** is a flowchart depicting the operation of an embodiment of the present invention; and
**Fig. 3** is a screen shot illustrating a depiction of the consequences of selecting a selectable item in accordance of an embodiment of the present invention.

### DETAILED DESCRIPTION

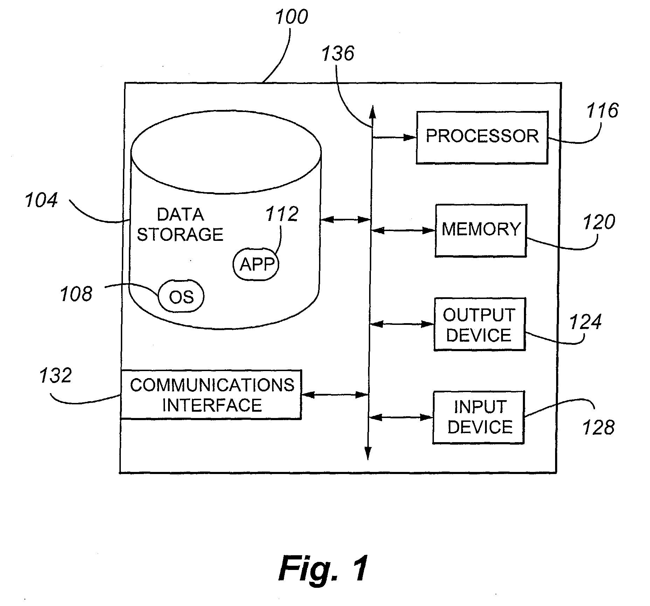

With reference now to **Fig. 1**, aspects of a general purpose computer 100, such as may be used in connection with an application comprising the present invention are illustrated. In general, the computer 100 may include data storage 104 for storing operating instructions and/or data. For example, the data storage 104 may store operating system programming 108, and application programming 112. The data storage 204 may include magnetic storage devices, solid state storage devices, optical storage devices, logic circuits, or any combination of such devices. It should further be appreciated that the programs and data that may be maintained in the data storage 204 can comprise software, firmware or hardware logic.

The computer 100 also generally includes a processor 116 that may run application programs 112 in connection with operating system instructions 108. The processor 116 may comprise a general purpose, programmable processor or digital signal processor, or other device capable of running application programming 112.

Memory 120 may be provided for use in connection with the running of operating system 108 or application 112 programming. The memory 120 may comprise solid state memory, such as RAM, DRAM, or SDRAM.

An output device 124 for providing output to a user may be provided. In particular, the output device 124 may comprise a device capable of displaying images. Accordingly, the output device 124 may comprise a cathode ray tube, liquid crystal display, plasma display, or other image display device.

One or more input devices 128 may also be provided. In general, the input device 128 functions to receive commands or selections from a user. Accordingly, the input device 128 may comprise a key board and/or pointing device, such as a mouse or track ball.

The computer 100 may also include a communications interface 132. If provided, the communications interface 132 may function to interconnect or network one or more computers 100 to one another. An example of a communications interface 132 may therefore include an Ethernet interface, a modem, or a switched circuit telephone interface. A communication bus 136 permits the exchange of data between the various components of the computer 100. As can be appreciated by one of skill in the art, various functions and components may be distributed among different physical components and locations. For example, when used in connection with a networked computer system, the present invention may function in connection with application programming 112 that is maintained in data storage 104 provided as part of a storage system that is remote from the processor 116 that is executing the application programming 112 instructions. As a further example, the output device 124 and input device 128 may be remote from the processor 116 in connection with which the present invention is operating. As can also be appreciated by one of skill in the art, various components may be interconnected to one another through a number communication interfaces 132. The operating system programming 108 generally provides a functional platform on which application programming 112 may run. Examples of operating system programming include the UNIX, WINDOWS and MAC OS operating systems,

The application programming 112 may generally provide a desired functionality. For example, application programming 112 may provide a productivity function, such as a word processing, spreadsheet, or accounting program. Other examples of application programming 112 include utility programs, communication programs, and games. In general, execution of the application programming may, for example in connection with the operating system 108, display information to a user graphically. In particular, the application programming 112 may provide information to and receive information from a user through a graphical user interface. As can be appreciated by one of skill in the art, the visual display generated in connection with the operation of the application programming 112 may therefore include various graphical elements, such as various selectable items The selectable items may include menu items, buttons, radio buttons, drop down lists, icons, hyperlinks or any other graphical or textual item that is presented to a user and that can be selected and/or manipulated by the user, for example using a cursor controlled by a pointing device. Selectable items may also include identifiers associated with files. Therefore, as used herein, a selectable item is any feature displayed to a user that can be selected by the user to produce an action.

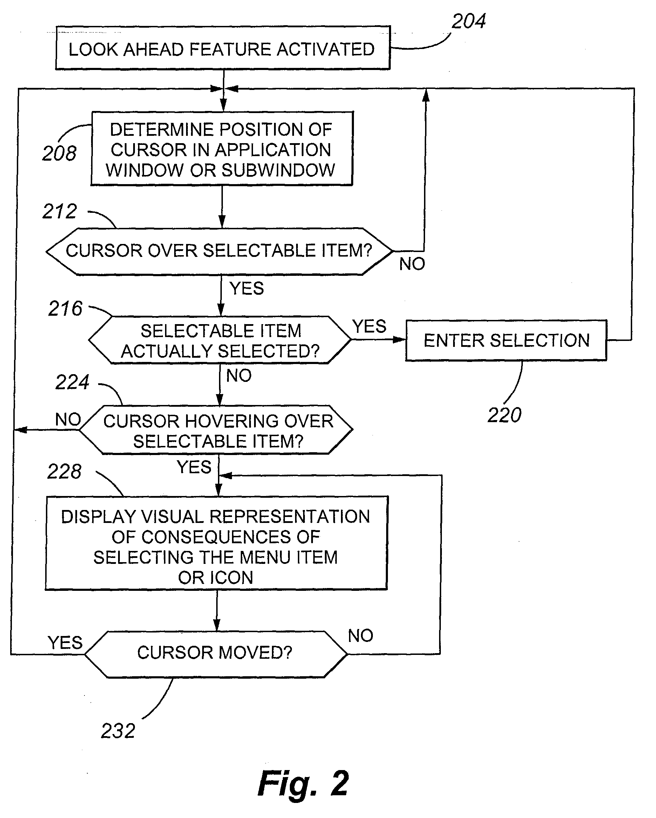

With reference now to **Fig. 2**, the operation of a system in accordance with an embodiment of the present invention is depicted. Initially, at step 204, the look ahead feature provided by the invention is activated. Accordingly, the look ahead feature may be selectively activated by a user, or turned on by default when an application 112 is run. Alternatively, the look ahead feature may always be active. At step 208, the position of the cursor in the application window or subwindow is determined. At step 212, a determination is made as to whether the cursor is over a selectable item.

At step 216, a determination is made as to whether the selectable item has in fact been selected. As can be appreciated by one of skill in the art, a selectable item may be selected through a specified user action. For example, in a typical application, a user makes selections by depressing a mouse button while the cursor is positioned over the item being selected. If the selectable item is actually selected, the selection is entered normally (step 220). That is, the application behaves normally. The system may then return to step 208.

If the selectable item is not actually selected, a determination is made as to whether the cursor is hovering over the selectable item (step 224). In accordance with an embodiment of the present invention, a cursor is "hovering" when it remains within an area coincident with the selectable item for at least a predetermined period of time. In accordance with another embodiment of the present invention, the cursor is considered to be hovering when it remains stationary within an area corresponding to the selectable item for at least a first predetermined period of time. The predetermined period of time that must elapse for a cursor to be considered hovering maybe quite short. For example, the predetermined period of time may be 0.5 sec. If the cursor is not hovering over a selectable item, the system returns to step 208.

If the cursor is hovering over a selectable item, a visual representation of the consequences of actually selecting the selectable item is displayed (step 228). In particular, a depiction of the submenu, window, dialogue or other consequence of selecting a particular item is displayed. In accordance with a further embodiment of the present invention, the display may be in the form of an overlay transparency. According to still another embodiment, the display may be in the form of a stencil outline. Accordingly, the display of information as a result of the operation of the look ahead feature disclosed herein can be easily distinguished from a display resulting from the actual selection of a selectable item. In accordance with an alternative embodiment of the present invention, the consequences of selecting a selectable item are displayed as a fully saturated overlay. When displayed as a fully saturated overlay, an indication that the display is the result of the operation of the look ahead feature disclosed herein can be provided. For example, the use of a particular color or display of a particular symbol might provide such an indication. This indicates to the user that the item has not actually been selected.

At step 232, a determination is made as to whether the cursor has been moved. If the cursor has not been moved (i.e., it is still hovering over the selected item), the visual representation of the consequences of actually selecting that item continue to be displayed (step 228).

If the cursor has been moved, the position of the cursor is determined (Step 208), and the above-described process for determining whether to display the consequences of selecting a selectable item continues. Accordingly, the present invention may operate continuously to provide a depiction of the consequences of selecting selectable items as a user allows the cursor to hover over such items. The process ends if the look ahead feature is deactivated at any time, for example by receiving a user selection to deactivate the feature or to close an application providing or associated with the feature.

In accordance with still another embodiment of the present invention, the cursor is considered to be hovering if a selectable item has been highlighted or provisionally selected such that the user may select the selectable item (for example by hitting the enter key), and that item remains provisionally selected for at least a predetermined period of time. Therefore, moving a cursor may, in accordance with embodiments of the present invention, comprise provisionally selecting a selectable item that was not provisionally selected before, and determining the position of the cursor may comprise determining a provisionally selected selectable item. Accordingly, the user can move through selectable items and invoke the look ahead feature of embodiments of the present invention by using keyboard commands in addition or as an alternative to commands provided using a mouse or other pointing device.

As can be appreciated by the description provided herein, the present invention provides a visual depiction of the results of making an actual selection, but without requiring such actual selection. Furthermore, the user is not required to position the cursor over a button or other selectable item and actually make a selection to exit or to otherwise discontinue a display that would result from the selection of a selectable item. Instead, the user is only required to reposition the cursor so that it is no longer hovering over the selectable item. Thus, the look ahead feature of the present invention allows the users to explore functions and features of an application by moving the cursor to different selectable items, and without requiring separate actions in order to select and/or deselect items.

In addition, by providing a visual representation of the results of a selection, such results can be accurately and quickly communicated to the user. In particular, the user is not required to read and comprehend a textual description of the results of an action. Rather, the user is shown the actual results or a depiction of the results that would be obtained if the selection were actually made.

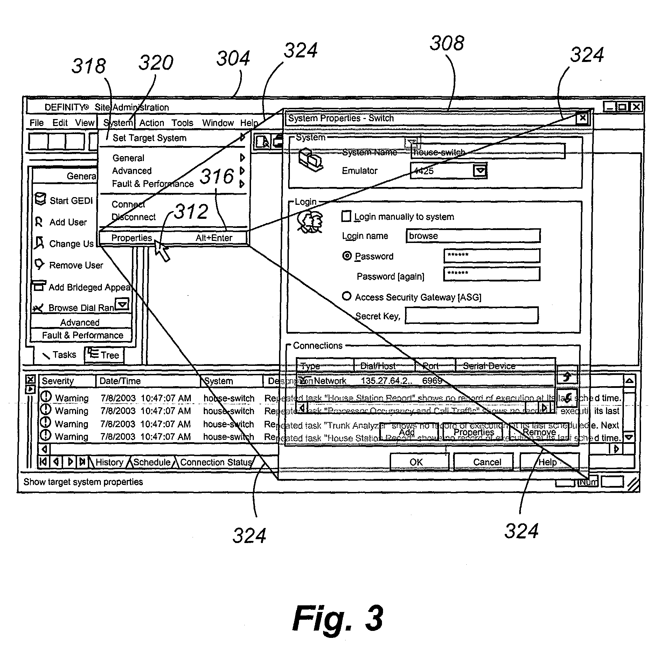

With reference now to **Fig. 3**, a screen shot illustrating a depiction of the consequences of selecting a particular selectable item in accordance with an embodiment of the present invention is shown. In the example of **Fig. 3**, the application is contained within a first window 304. The illustrated application is a Definity® site administration program for use in connection with the Definity® communication server available from Avaya Inc. However, the present invention is not limited to such an application. In particular, the present invention may be incorporated in and/or used in connection with any application that allows users to make selections, and is particularly useful in connection with applications using a graphical user interface. The consequences of a particular selection by a user are displayed in the dialogue 308 shown as a transparent overlay.

The particular dialogue 308 in the example of **Fig. 3** is entitled "System Properties-Switch." This particular dialogue 308 is displayed because the cursor 312 is hovering over the menu item "Properties" 316. The menu 318 including the selectable item "Properties" 316 is displayed as a result of a previous selection of the "System" menu item 320. Alternatively or in addition, the selectable items included in the "System" menu 320 are displayed as a result of the user hovering the cursor 312 over the "System" menu item 320. According to such an alternative embodiment, the System menu 318 continues to be displayed so long as the cursor remains within the area of the menu 318. Then, the dialogue 308 would be displayed as a result of the cursor 312 hovering over the menu item Properties 316. In addition, a visual indication of the relationship between the selectable item and the depiction of a consequence of selecting the selectable item may be displayed. For example, projection lines 324 may be provided in order to emphasize the connection between the selectable item (here menu item 316) and the depiction of the results of selecting that item (here dialogue 308).

As can be appreciated by one of skill in the art, the present invention may be incorporated as part of an application program. Alternatively, the present invention may be implemented as a separate application that may be operated in connection with various user applications for which a user desires the look ahead functionality provided by the present invention. In embodiments in which the present invention is implemented as an application that is separate from the application for which the look ahead feature is being used, the present invention may be implemented as part of the operating system and may make use of resource files used to create displays and menus.

In accordance with additional embodiments of the present invention, the look ahead feature could be used to provide an indication of a file's contents. For example, when used with a file management tool provided as part of an operating system or application, hovering the cursor over a file identifier could result in a display of data included in the file. For instance, all or a portion of the first page of a textual document may be depicted in a sub window or dialogue if the user hovers the cursor over an entry in a list of files related to the document containing the displayed page. As with other embodiments, the depiction can be presented using a transparent overlay. Accordingly, embodiments of the present invention may be used to conveniently provide a user with a visual indication of the contents of a file, without requiring that the file be selected, loaded, and if the file is not the one actually desired, closed.

The foregoing discussion of the invention has been presented for purposes of illustration and description. Further, the description is not intended to limit the invention to the form disclosed herein. Consequently, variations and modifications commensurate with the above teachings, within the skill and knowledge of the relevant art, are within the scope of the present invention. The embodiments described hereinabove are further intended to explain the best mode presently known of practicing the invention and to enable others skilled in the art to utilize the invention in such or in other embodiments and with various modifications required by their particular application or use of the invention. It is intended that the appended claims be construed to include the alternative embodiments to the extent permitted by the prior art.

## Claims

1. A method for providing a visual representation of the consequences of taking an action, comprising:
first moving a cursor in response to input from a user;
first detecting a position of said cursor within an application window; and
in response to said position of said cursor corresponding to a first selectable item within said application window, displaying a depiction of a consequence of selecting said first selectable item.

2. The method of Claim 1, further comprising:
second moving a cursor in response to input from a user;
second detecting a position of said cursor; and
in response to said position of said cursor no longer corresponding to said first selectable item within said application window, discontinuing said displaying a depiction of a consequence of selecting said first selectable item.

3. The method of Claim 1, wherein said displaying comprises displaying as a transparent overlay.

4. The method of Claim 1, wherein said displaying comprises displaying as a stencil outline.

5. The method of Claim 1, wherein said displaying comprises previewing a consequence of selecting said selectable item.

6. The method of Claim 1, wherein said selectable item comprises at least one of a menu item, an icon, and a button.

7. The method of Claim 1, further comprising:
displaying an indication of a relationship between said selectable item and said depiction of a consequence of selecting said selectable item, wherein said indication of a relationship between said selectable item and said depiction of a consequence of selecting said selectable item comprises a projection line.

8. The method of Claim 1, wherein said displayed depiction comprises at least one of an inactive submenu, an inactive window, and an inactive dialogue.

9. The method of Claim 1, wherein said first selectable item comprises a file identifier, and wherein said displaying a depiction of a consequence of selecting said first selectable item comprises displaying at least a portion of a file.

10. An apparatus for displaying a consequence of a selection to a user, comprising:
means for visually displaying;
means for receiving user input;
means for determining a position of a cursor, wherein said cursor is displayed by said means for visually displaying and is responsive to said means for receiving user input;
means for determining a relationship between a position of a selectable item displayed by said means for visually displaying and said cursor; and
means for generating a depiction of a consequence of selecting said selectable item at least when said cursor is within an area occupied by said selectable item on said means for visually displaying.
